Europäisches Patentamt

European Patent Office

Office européen des brevets

(11) Publication number: 0 251 288
A2

# EUROPEAN PATENT APPLICATION

(21) Application number: 87109369.6

(51) Int. Cl.⁴: G05D 7/01

(22) Date of filing: 30.06.87

(30) Priority: 30.06.86 US 880216

(43) Date of publication of application:
07.01.88 Bulletin 88/01

(84) Designated Contracting States:
AT BE CH DE ES FR GB GR IT LI LU NL SE

(71) Applicant: The Coca-Cola Company
310 North Avenue
Atlanta Georgia 30313(US)

(72) Inventor: Credle, William S., Jr.
5264 Golfcrest Circle
Stone Mountain Geogia 30088(US)
Inventor: Schroeder, Alfred A.
2811 Whisper Fawn
San Antonio Texas 78230(US)

(74) Representative: Abitz, Walter, Dr.-Ing. et al
Abitz, Morf, Gritschneder, Freiherr von
Wittgenstein Postfach 86 01 09
D-8000 München 86(DE)

(54) Flow control with slotted flow openings.

(57) A flow control apparatus and method, wherein the flow control is of the piston and sleeve type for use in a beverage dispensing valve and, wherein the liquid flow openings through the sleeve wall are slots rather than round holes, providing improved flow control. A method for inexpensively providing openings (preferably slots) in a metal sleeve comprising turning down and punching, is also described.

FIG 6

EP 0 251 288 A2

## FLOW CONTROL WITH SLOTTED FLOW OPENINGS

### BACKGROUND OF THE INVENTION

#### Field of the Invention

This invention relates to beverage dispensing valves for beverage dispensers, and in particular to an improved flow control and method therefor.

#### Background of the Invention

Flow controls for beverage dispensing valves are well known, as shown, for example, in U.S. Patents 4,230,147; 3,422,342; and 2,984,261. Such flow controls are used in both the syrup and the soda conduits of beverage dispensing valves to deliver a constant flow rate regardless of incoming fluid pressure variations. Such flow controls are pressure compensated devices that control the syrup and soda flow rate through the valve. These flow controls are usually the piston and sleeve design with the sleeve including a circumferential series of circular flow openings. The bottom edge of the piston regulates the flow through these openings as the piston moves.

### SUMMARY OF THE INVENTION

This invention is an improved flow control for beverage dispensing valves used in beverage dispensers. The flow control of this invention is of the piston and sleeve type, with the sleeve having elongated slots rather than circular openings. It has been found that the liquid flow rate can be controlled better with narrow slots than with round holes. This is true regardless of the size and number of round holes that are used. For plastic sleeves, it is easy to mold slots therein. For metal sleeves, which most existing sleeves are, the cutting of slots is expensive. One aspect of this invention is a unique manufacturing technique for providing the flow openings in the sleeve. This technique includes turning down a portion of the sleeve so the material is thin enough to allow openings (preferably slots) to be punched out without deforming the sleeve. This technique allows openings of any shape and size to be put into a sleeve at a low cost, and lower than the cost of the prior art method of machining round holes.

An important advantage of the present flow control is that, in addition to being less expensive, it is more versatile. That is, where six different flow controls are required using a known prior art flow control, only two of the present flow controls are required. The prior art uses a different flow control for each of: (1) standard flow carbonated water, (2) fast flow carbonated water, (3) standard flow sugar syrup, (4) standard flow diet syrup, (5) fast flow sugar syrup, and (6) fast flow diet syrup. One flow control of this invention can be used for both standard and fast flow carbonated water, and one flow control of this invention can be used for all of the four different syrup situations. In addition, a beverage dispensing valve using the flow control of the present invention can be changed back and forth between standard and fast flow rates (1.5 ounces per second and 3.0 ounces per second, respectively) by simply adjusting the flow control. The prior art requires two different flow controls.

It is therefore an object of the present invention to provide a flow control unit with improved flow control properties.

It is a further object of the present invention to provide a flow control with slotted flow control openings.

It is another object of the present invention to provide a method for providing improved flow control.

It is a further object of the present invention to provide an improved and less expensive method for providing the flow openings in a metal flow control sleeve.

It is another object of the present invention to provide a single flow control that can be used in a number of different applications, thus reducing costs and inventory and manufacturing problems.

It is a still further object of this invention to provide a method for converting a beverage dispensing valve from one application to another (such as from standard flow to fast flow, or from sugar to diet syrup) by adjusting the flow control rather than replacing it.

It is another object of the invention to provide a flow control that can hold a set flow rate with less error over a larger range of pressure changes and flow rates than can previous flow controls.

### BRIEF DESCRIPTION OF THE DRAWINGS

The present invention will be more fully understood from the following detailed description when read in connection with the accompanying drawings wherein like reference numerals refer to like elements and wherein:

Fig. 1 is a cross-sectional view through a flow control according to the present invention with slotted flow openings in the sleeve;

Fig. 2 is a partly cut-away, perspective view of a sleeve with a portion turned down for use in punching out slots;

Fig. 3 is a perspective view of a sleeve having a portion turned down and with slots punched out;

Fig. 4 is a an end view of a beverage dispensing valve showing two flow controls and a nozzle;

Fig. 5 is a side view of a sleeve according to a preferred embodiment of this invention; and

Fig. 6 is an exploded, cross-sectional side view through the sleeve of Fig. 5 and a preferred piston.

## DETAILED DESCRIPTION OF THE PREFERRED EMBODIMENTS

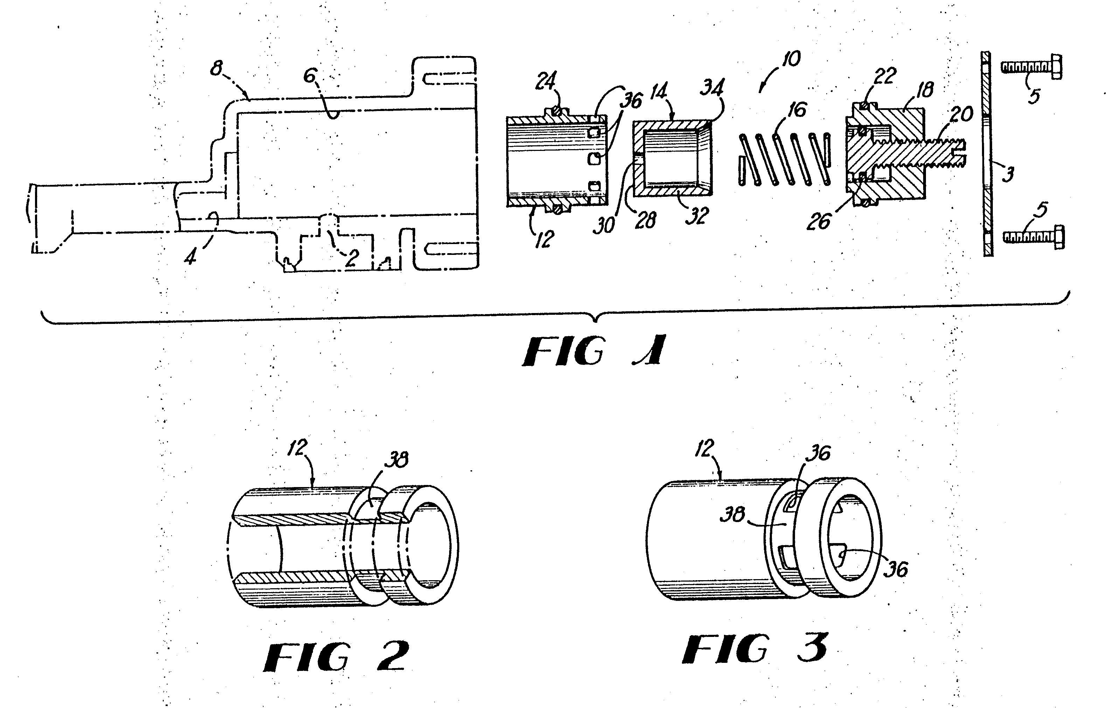

With reference now to the drawings, Fig. 1 shows a flow control 10 adapted to be inserted into a flow control chamber 6 of a beverage dispensing valve 8 (only a portion of which is shown). The valve 8 includes a liquid passageway 4 leading into the chamber 6, and a liquid passageway 2 leading from the chamber 6 (and to a mixing and dispensing nozzle, not shown). The valve 8 also includes a flow control retainer 3 to be connected to the valve by screws 5, as is well-known in the art.

The flow control 10 has a sleeve 12, a piston 14, a spring 16, an adjusting nut 18, an adjusting screw 20, and a pair of O-rings 22 and 24. The O-rings 22 and 24 seal against the wall of the chamber 6. The flow control 10 has another O-ring 26 that seals between the nut 18 and the adjusting screw 20. The piston has a disc-shaped head 28 with a liquid entrance port 30, and a cylindrical skirt 32 with a bottom edge 34. The sleeve has a circumferential series of liquid exit slots 36 therethrough. The liquid flow rate through the slots 36 is controlled by the position of the bottom edge 34 of the movable piston 14, relative to the slots 36.

According to this invention, these liquid flow openings 36 are in the shape of slots, that is, elongated, non-circular openings, in contrast to the prior art circular openings. It has been found that these slots give improved flow control. It appears that the reason for this is that for a given amount of piston movement (that is, for a given change in pressure) the area of the exit port covered (or uncovered) is the same at all positions of the piston relative to the opening when using a rectangular opening, while such area varies depending on the position of the piston relative to the opening when using the prior art round opening. When the sleeve 12 is made of plastic, the slots 36 can be easily molded. However, when the sleeve is metal, there is a problem because it is very expensive to machine such slots.

Another feature of the present invention is a unique method for producing the openings (such as the slots 36) in a metal sleeve. Referring to Figs. 2 and 3, this method includes the steps of first turning down the sleeve 12 in the area in which the slots are to be located, producing an annular groove 38 and then punching out the slots. The sleeve is turned down far enough so that the thickness of the sleeve wall in the bottom of the groove is such that the slots 38 can be punched therethrough without any damage or deformation of the sleeve. This method can be used to provide any shape of sleeve openings. While it is preferred to have slotted openings, this method can also be used to less expensively provide the round openings of the prior art.

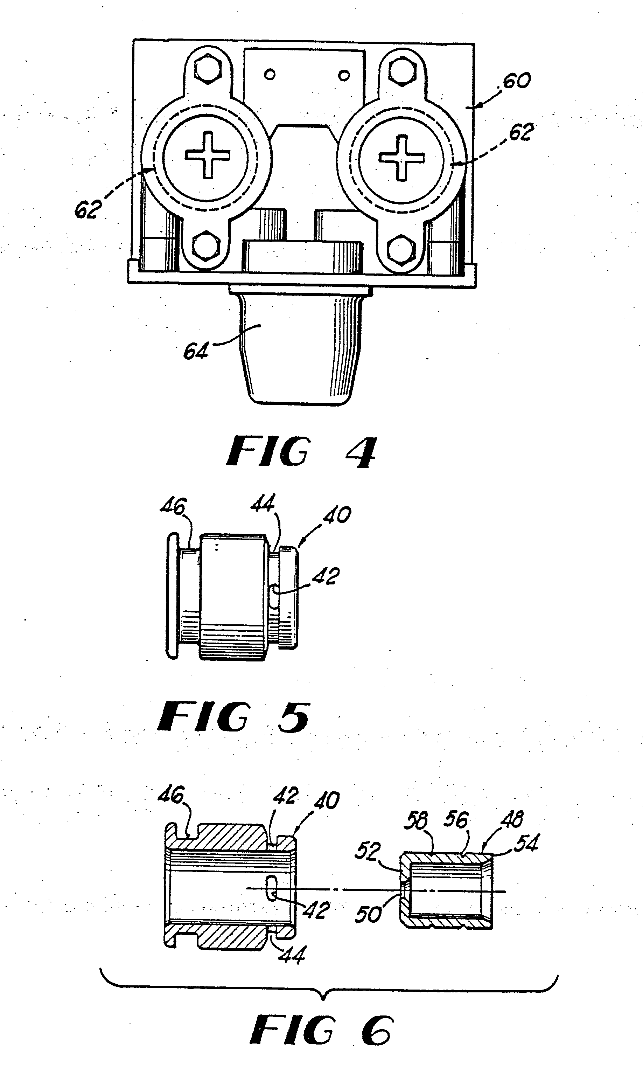

Fig. 4 shows a beverage dispensing valve 60 having two flow controls 62 and a nozzle 64. The valve 60 can be any known valve, and the flow controls are those of the present invention, with one being a carbonated water unit and the other being a syrup unit. These units are different. However, the same carbonated water unit can be adjusted and used for either standard or fast flow rates (1.5 ounces per second and 3.0 ounces per second, respectively). The same syrup unit can be adjusted and used for any one of four applications: (1) standard flow sugar syrup, (2) standard flow diet syrup, (3) fast flow sugar syrup, and (4) fast flow diet syrup.

Fig. 5 shows a preferred sleeve 40 having four equally spaced-apart slots 42 in a turned down ring 44. The sleeve also has an annular groove 46 for receiving an O-ring. The portion of the sleeve from the ring 44 to the adjacent end has a slightly reduced thickness to reduce any restriction to the liquid flow out of the slots 42.

Fig. 6 shows the sleeve 40 and a preferred piston 48 having a liquid flow inlet opening 50 in the head 52 and a bottom edge 54. The piston 48 also has two lubrication grooves 56 and 58.

A preferred thickness for the bottom of the groove is approximately .020 inch. The slots have a preferred size of a length of from about .100 to .300 inch by a width of about .060 inch. A more preferred dimension for the slots 36 is .063 inch by .200 inch for carbonated water and .063 inch by .156 inch for syrup, that is, an axial width of .063 inch by a circumferential length of .200 inch and .156 inch respectively, for carbonated water and syrups. The preferred shape for the slots 36 is rectangular, although other shapes can be used, such as other parallelograms.

While the preferred embodiments of this invention have been described above in detail with reference to a post-mix dispensing valve for mixing carbonated water and syrup, it can be used in any beverage dispensing valve such as for juices, pre-mix soft drinks, etc. It is to be understood that variations and modifications can be made therein without departing from the spirit and scope of the present invention as set forth in the appended claims.

**Claims**

1. A flow control for a beverage dispensing valve comprising:

    (a) a cylindrical sleeve;

    (b) means for closing one end of said sleeve;

    (c) a piston slidably received in said sleeve adjacent to the other end of said sleeve;

    (d) a spring positioned in said sleeve between said piston and said closing means;

    (e) a liquid flow opening through said piston into said sleeve; and

    (f) a liquid flow opening through said sleeve, whereby the movement of said piston controls the liquid flow therethrough, and wherein said sleeve opening is in the shape of a slot.

2. The flow control as recited in claim 1 wherein said sleeve includes a plurality of said slots therethrough.

3. The flow control as recited in claim 2 wherein said slots are all identical to each other and are arranged in a circumferential array around said sleeve.

4. The flow control as recited in claim 2 wherein said sleeve is metal, and wherein said slots are punched out of an annular ring of said sleeve having a reduced thickness.

5. The flow control as recited in claim 2 wherein said slots have a circumferential length in the range of from about .100 to .300 inch and an axial width of about .06 inch.

6. A method for providing a metal sleeve for a flow control for a beverage dispensing valve with a circumferential array of liquid flow openings therethrough comprising the steps of:

    (a) turning down the thickness of said sleeve in an annular ring where said openings are to be located; and

    (b) punching out said openings through said turned down ring.

7. The method as recited in claim 6 wherein said openings are slots.

8. The method as recited in claim 6 wherein said turned down ring has a thickness of approximately .020 inch and said sleeve has a thickness of approximately .125 inch.

9. A method as recited in claim 6 wherein said slots have a circumferential length of approximately from about .100 to .300 inch and an axial width of approximately .06 inch.

10. A method for controlling the flow of a liquid through a beverage dispensing valve comprising the steps of:

    (a) providing a flow control in the valve having a sleeve with a closed end and an open end, a piston in said sleeve adjacent said open end, a spring in said sleeve between said closed end and said piston, a liquid entrance port in said piston and a plurality of liquid exit ports through said sleeve, and

    (b) providing said sleeve openings in the shape of slots.

11. A method for converting a beverage dispenser valve having a piston and sleeve type flow control, from a first application to a second application comprising:

    (a) providing said sleeve with liquid flow openings therethrough in the shape of slots, and

    (b) adjusting said flow control from use for said first application, to use for said second application.

12. The method as recited in claim 11 wherein said first application is a standard flow rate and said second application is a fast flow rate.

13. The method as recited in claim 11 wherein said first application is controlling the flow rate of one of a sugar syrup and a diet syrup, and said second application is controlling the flow of the other of said sugar syrup and said diet syrup.

FIG 1

FIG 2

FIG 3

0 251 288

**FIG 4**

**FIG 5**

**FIG 6**